# EUROPEAN PATENT APPLICATION

(11) **EP 3 062 436 A1**
(43) Date of publication of application: **31.08.2016**
(21) Application number: 15156369.9
(22) Date of filing: 24.02.2015
(51) Int. Cl.: H02P 29/02, H02P 25/22, F03D 7/00, G01R 31/34

(54) **Method of responding to a winding fault**

(71) Applicant: Siemens Aktiengesellschaft, 80333 München (DE)
(72) Inventor: Lemma, Edom, 7100 Jerlev, Vejle (DK); Madsen, Anders Jakob, 2300 Copenhagen (DK)

(57) **Abstract**

The invention describes a method of responding to a winding fault in a wind turbine generator (2), which method comprises the steps of determining a faulty stator winding (Wₓ); disconnecting the faulty stator winding (Wₓ); and resuming operation of the generator (2), at below-rated power, without the faulty winding (Wₓ). The invention further describes a wind turbine generator (2); and a wind turbine (1).

## Description

The invention describes a method of responding to a winding fault in a wind turbine generator. The invention further describes a wind turbine generator; and a wind turbine.

The stator of a large generator such as a wind turbine generator is wound with a plurality of windings or coils that are arranged about outwardly projecting teeth on a core or body. In one realization, a "winding" can comprise several individual wires, for example with square cross-section, stacked or otherwise grouped in a bundle, and each individual winding is enclosed by an insulating material such as enamel. The winding itself must be electrically isolated from the metal stator core. Each winding comprises straight sections arranged between parallel stator teeth, and 180° bent end sections at the outer ends of the stator. If the end sections of different windings overlap, these must also be electrically isolated from each other in a winding overhang region using some appropriate insulation.

A winding short-circuit fault can arise because of wear and tear on the insulation. For example, the high currents induced in the stator windings result in high winding temperatures. The resulting stress can ultimately lead to insulation damage, for example a ground insulation paper may degrade, and may result in a winding-to-ground short-circuit fault (the stator core is effectively connected to ground). A phase-to-phase or phase-to-neutral short-circuit fault between windings can occur when insulation in the winding overhang becomes damaged.

Such winding short-circuit faults require shut-down of the generator until the fault can be repaired. However, it can be very difficult to access the damaged winding insulation, particularly when the insulation damage is somewhere along a straight winding section between stator teeth, or when insulation damage is in a non-accessible region of a generator (for example, in the drive-end region). In such a case, the entire generator must be replaced. Clearly, such a dismantling and replacement procedure requires time, particularly in the case of an offshore wind turbine that may be difficult to access, and is associated with unfavourably high expense, since warranty costs may be incurred in addition to the actual repair costs. Unfavourable weather conditions may prolong the downtime of the wind turbine, adding to the loss in revenue.

In one approach to this problem, the fault may be circumvented. For example, the generator can be constructed with multiple redundancy, for example by using a stator design based on four independent stator sections with an appropriate number of rectifiers, converters etc. in order to deliver the required three-phase output. In such an approach, the response to a winding fault in one stator section would be to disconnect that entire section and continue operation with the remaining three sections. However, the high level of added redundancy presents a very large cost overhead.

It is therefore an object of the invention to provide an alternative way of dealing with such a fault, avoiding the problems mentioned above.

This object is achieved by the method of claim 1 of responding to a winding fault in a wind turbine generator; by the wind turbine generator of claim 6; and by the wind turbine of claim 13.

According to the invention, the method of responding to a winding fault in a wind turbine generator comprises the steps of determining a faulty stator winding; disconnecting the faulty stator winding; and resuming operation of the generator, at below-rated power.

An advantage of the method according to the invention is that any loss in revenue arising on account of the faulty winding can be minimized. Instead of having to shut down the wind turbine until the generator can be replaced, the generator can continue to be operated without the faulty winding. A shutdown of the wind turbine may be required only until the faulty winding has been disconnected.

According to the invention, the wind turbine generator comprises a stator wound with a plurality of windings, wherein at least one winding is realized to be disconnected, and wherein the generator is realized to operate without a disconnected winding.

An advantage of the generator according to the invention is that it does not have to be replaced immediately following a winding fault of the types described above and/or need not be shut down for an extended period of time. Instead, the wind turbine (after a relatively short downtime to identify and disconnect the faulty winding) can continue to operate - albeit at a reduced power output - until a more suitable time for repairing the generator. Since the generator can effectively carry on working, the method according to the invention may be regarded as a kind of "fault ride-through".

According to the invention, the wind turbine comprises such a generator; and a monitoring arrangement realized to detect and report a winding fault.

An advantage of the wind turbine according to the invention is that it can facilitate a quick response to a winding short-circuit fault, thereby reducing the length of time during which the wind turbine is shut down until the faulty winding is disconnected.

Particularly advantageous embodiments and features of the invention are given by the dependent claims, as revealed in the following description. Features of different claim categories may be combined as appropriate to give further embodiments not described herein.

In the following, without restricting the invention in any way, it may be assumed that the generator is a polyphase generator, for example for the generation of three-phase power. A stator is generally constructed as a cylindrical stator body made of steel laminate sheets shaped to form stator teeth, between which the windings are arranged. In a direct-drive generator, the stator comprises outwardly projecting stator teeth. Because a stator can be very large, the stator for a direct-drive wind turbine generator may be constructed in segments, where each stator segment comprises an equal number of stator teeth and winding sections. For example, a stator with a diameter of 4 m may be constructed from six equal stator segments, each carrying an equal number of winding sections. Various different stator winding arrangements are possible. In one embodiment of the generator according to the invention, each winding may be wound about a single stator tooth. In a further embodiment of the generator according to the invention, each winding may be wound about adjacent stator teeth.

In a preferred embodiment of the invention, the wind turbine generator has a stator wound with a plurality of parallel-connected winding sets, wherein each parallel-connected winding set is assigned to one of a plurality of phases, and is characterized in that a winding of a winding set is realized to be disconnected from its winding set. An advantage of such a generator is that it provides a built-in means for facilitating a response to a short-circuit fault of the types described above. While an additional cost is involved in design and construction of the generator according to the invention, this additional cost may be significantly lower that the costs associated with downtime and generator replacement.

The step of detecting the winding fault can be done using any appropriate method. For example, a short-circuit fault can be detected using smoke detectors arranged in the interior of a generator housing, or in the interior of a canopy or nacelle of the wind turbine. An insulation failure can often be accompanied by smoke, so that the use of smoke detectors may be sufficient to determine the occurrence of such a fault. Alternatively or in addition, such a fault may be detected by monitoring a performance parameter of the wind turbine. For example, a park operator can monitor various parameters relating to the operation of the wind turbines of a wind park. An unexpected drop in power output can be an indication of a short-circuit fault in one of the wind turbines. Since each wind turbine is generally equipped with its own controller, a wind turbine controller can also detect and report a potential fault. For example, a sudden drop in a phase voltage may be interpreted as an indication of a faulty winding of that phase. To detect a winding fault, the wind turbine can comprise a suitable monitoring arrangement that is realized to monitor an electrical property of a winding. For example, a suitable monitoring circuit can measure the impedance of windings and/or stator segments, depending on the generator construction.

Since a short-circuit fault can occur essentially at any time and for any winding, in a preferred embodiment of the invention, each winding is realized to be disconnected from its winding set. In this way, the power losses can be minimized. For example, if each phase of a three-phase generator comprises n parallel-connected equal impedance windings, the power contribution of each winding can be expressed as 100/3n. In the case of 28 parallel windings per phase, the power loss after disconnection of one faulty winding is therefore only about 1.2%.

To disconnect an individual winding or a stator segment, suitable switches are preferably incorporated in the electrical circuit(s). In one preferred embodiment of the invention, a winding comprises a series-connected breaker switch. Depending on the stator construction, each winding can preferably be equipped with such a series-connected breaker switch. In this way, each winding on its own can be disconnected if required, thus minimizing the power losses in a fault ride-through following a winding short-circuit fault.

When a generator operates with an incomplete winding set, i.e. a winding of a winding set has been disconnected, the system is effectively loaded asymmetrically with regard to mechanical forces acting across the air gap of the generator. This asymmetrical loading may result in an increased level of noise and/or an increase in vibration. These side-effects may remain at tolerable levels, both from the point of view of mechanical loading and permissible noise levels. However, such noise and/or vibration may exceed acceptable levels. Therefore, in a preferred embodiment of the invention, the method comprises the steps of determining a stator winding opposite to the faulty stator winding and also disconnecting that opposite stator winding, even though it is not defective. The result of this additional disconnection is to achieve a symmetrical loading, so that noise and vibration levels are reduced or eliminated. Preferably, the step of disconnecting the opposite stator winding is preceded by a noise monitoring step and/or a vibration monitoring step, and is performed when a noise threshold and/or a vibration threshold is exceeded. In this way, the additional winding is disconnected only if necessary. To this end, suitable modules can be deployed to detect and analyse noise and/or vibration levels.

In one preferred embodiment of the invention, the step of disconnecting a stator winding comprises a manual disconnection procedure. To this end, a technician can enter the wind turbine to access the generator. To determine which winding to disconnect, the technician may perform a suitable measurement. For example, a winding-to-ground fault can be located for a multi-segment stator by measuring the terminal resistance of the stator segments to determine which segment carries the faulty winding. Depending on the stator construction, a subsequent step may comprise disconnection of that segment, or further measurements on the windings of that segment to locate the faulty winding, which can then be disconnected on its own. Preferably, any breaker switch is arranged at a non-drive end of the generator to facilitate access.

In an alternative preferred embodiment of the invention, the step of disconnecting a stator winding comprises a remote disconnection procedure. This can be effected when the stator is equipped with breakers for the windings and/or stator segments. Such a breaker - i.e. a switch that can be opened or closed - can be connected in any suitable configuration to be controlled in response to a command from the wind turbine controller and/or from a wind park controller.

In such an embodiment involving the remote control of the breakers, a winding opposite to the faulty winding can also be disconnected remotely in order to reduce the effects of noise and/or vibration. Noise and vibration may arise primarily when the wind turbine is operating at a relatively high power output. At lower power, therefore, the additional non-faulty winding that was previously disconnected can be reconnected to increase the power output as long as noise and/or vibration thresholds are not exceeded. For example, at low wind speeds, a controller may decide to re-connect the additional winding in order to increase the power output of the wind turbine.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Fig. 1 shows a schematic representation of the windings of a polyphase stator in a generator according to the invention;
Fig. 2 shows a first stage in a fault response according to the invention;
Fig. 3 shows a further stage in the fault response according to the invention;
Fig. 4 shows a schematic representation of a wind turbine according to the invention;
Fig. 5 shows a schematic representation of power output for a wind turbine according to the invention and a prior art wind turbine.

In the diagrams, like numbers refer to like objects throughout. Objects in the diagrams are not necessarily drawn to scale.

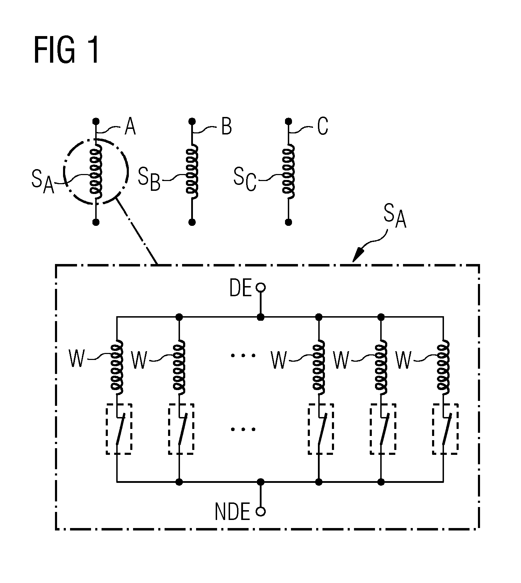

Fig. 1 shows a schematic representation of the windings of a three-phase stator in a generator according to the invention. Here, the windings W are distributed equally in three sets S_{A}, S_{B}, S_{C} corresponding to three phases A, B, C. In this realization, each winding set S_{A}, S_{B}, S comprises a plurality of parallel-connected windings W. Here, each winding W is represented by a coil symbol, indicating that the winding is "coiled" or wound about the stator teeth. In a physical realization of the stator, each winding of the parallel winding arrangement of one phase is effectively a loop placed about one or more stator teeth and connected at each outer end - drive end DE and non-drive end NDE - of the stator to the other windings of that phase. A short-circuit fault can occur at any time and in any winding W. Therefore, in this exemplary embodiment, each winding W is realized to be disconnected from its winding set S_{A}, S_{B}, S_{C}. This property is indicated by a switch symbol X in each case, at the non-drive end NDE of the stator.

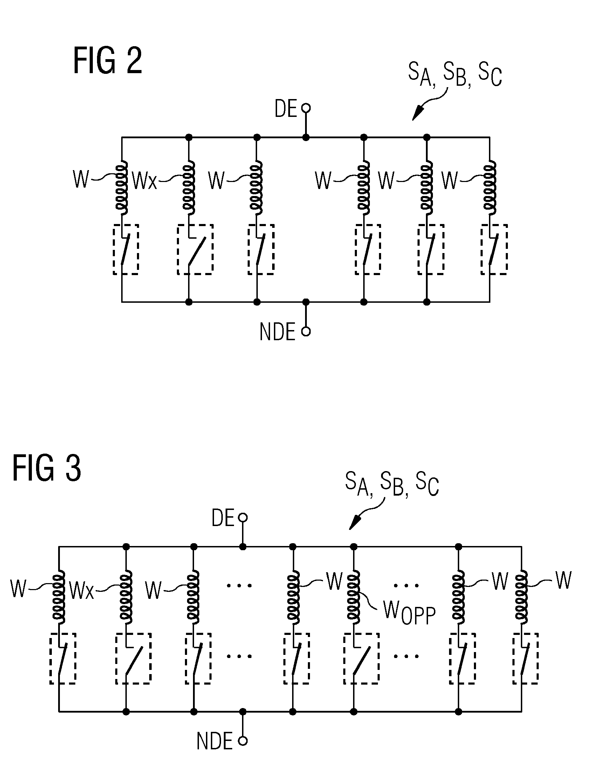

In the event of a short-circuit winding fault, the faulty winding Wₓ is first identified, as indicated in Fig. 2. The step of identifying the faulty winding Wₓ can be performed remotely or on-site. A physical disconnection of the faulty winding Wₓ is possible, for example by opening a breaker switch X already incorporated in the circuit for this purpose, or physically interrupting the faulty winding Wₓ using an appropriate tool such as a wire cutter.

Fig. 3 shows a further stage in such a fault response. Here, nose and/or vibration levels have been determined to exceed a threshold. A winding opposite to the faulty winding Wₓ has been identified, and this opposite winding Wₒₚₚ has also been disconnected or decoupled by opening its switch X or breaker X with the aim of restoring a loading symmetry in the generator as it operates. Such a disconnection step can serve to create symmetry by disconnecting one or more "non-failing" windings. For example, a winding decoupling can be performed on phases. In such a case, if a winding of a first phase fails, a corresponding winding in each of the other two phases shall be disconnected so as to create phase balance. This ensures that electrical performance will not be compromised by an asymmetrical winding failure.

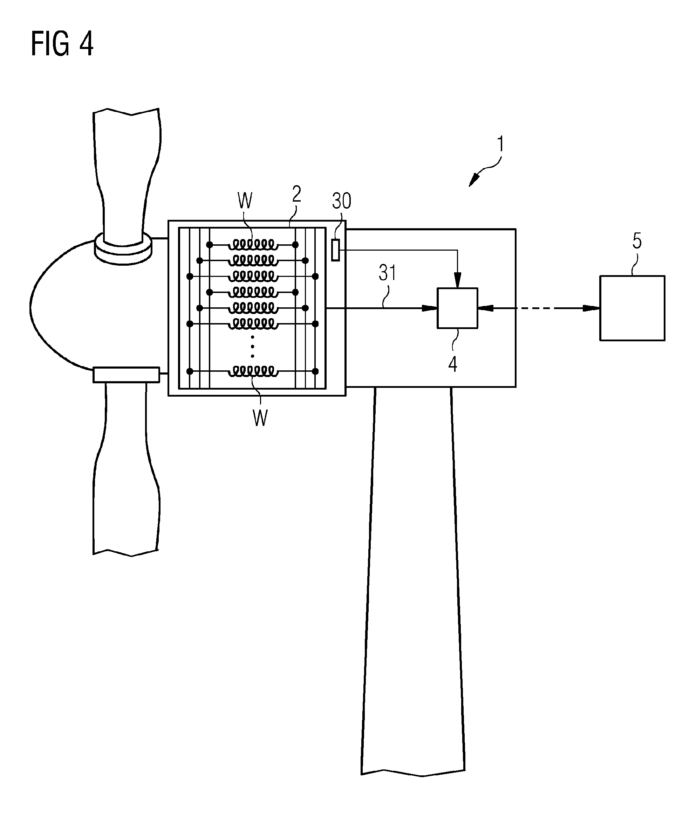

Fig. 4 shows a schematic representation of a wind turbine 1 according to the invention. The wind turbine 1 comprises a generator 2 according to the invention, with a three-phase stator carrying a plurality of windings W. The distribution of the windings W over three sets is only indicated very schematically. For the sake of clarity, breakers are also not shown in the diagram but a breaker may be assumed to be located between the non-drive end of each winding W (i.e. on the right-hand side in this diagram) and the node by which that winding W is connected in parallel to the other windings W of that set or phase. The wind turbine 1 has a controller 4 for controlling the operation of the generator and for monitoring various performance parameters. When the wind turbine 1 is one of several wind turbines of a wind park, such a wind turbine controller 4 can also communicate with a park controller 5. The wind turbine 1 comprises a monitoring arrangement 3 for monitoring the status of the stator windings W, indicated in a simplified manner as loops about the stator body. In this exemplary embodiment, the monitoring arrangement 3 comprises one or more smoke detectors 30. These can detect smoke that generally develops during a winding short-circuit fault. The monitoring arrangement 3 also comprises a monitoring circuit 31 for monitoring performance parameters of the generator 2. For example, a sudden drop in power output, a sudden increase in winding current, or a sudden drop in the impedance of a stator segment may indicate a winding short-circuit fault. When such a fault is detected, steps can be taken to temporarily shut down the generator 2, to arrange for disconnection of the faulty winding and any other "opposite" but non-faulty winding in order to maintain loading symmetry, and to resume operation at a correspondingly reduced power output. The extent of power reduction will depend on the number of windings that were disconnected in order to isolate the faulty winding, and whether an opposite winding was also disconnected in order to achieve loading symmetry.

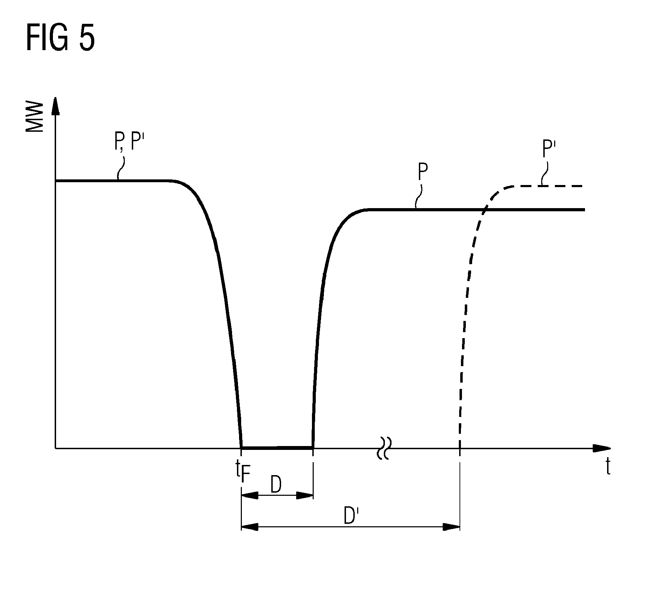

Fig. 5 shows a schematic representation of power output P for a wind turbine according to the invention, and power output P' for a prior art wind turbine, as a result of a winding short-circuit fault. The X-axis represents time at a time-scale of days or weeks. A winding short-circuit fault occurs at time t_{F}. The power output P' for a prior art wind turbine shows a pronounced downtime D' (which can be in the order of several weeks in the case of an offshore wind turbine, as indicated symbolically on the X-axis) after the fault occurs, since the generator must be shut down, dismantled, and replaced by a functional generator. In contrast, the power output P for the wind turbine according to the invention shows a favourably short downtime D (e.g. only a few days in the case of an offshore wind turbine) after the fault occurs, since the generator can resume operation after the faulty winding has been disconnected. Such a fault-correction step can be performed in a relatively short time, so that the generator can resume operation soon after. The slight reduction in power output can be regarded as acceptable in the face of the otherwise severe losses in revenue during the extended downtime D' that ensues when an entire generator must be replaced. Ultimately of course, even the generator according to the invention can be replaced, but at a time considered to be suitable. The generator can be reworked in the usual manner and used again in another wind turbine.

Although the present invention has been disclosed in the form of preferred embodiments and variations thereon, it will be understood that numerous additional modifications and variations could be made thereto without departing from the scope of the invention.

For the sake of clarity, it is to be understood that the use of "a" or "an" throughout this application does not exclude a plurality, and "comprising" does not exclude other steps or elements.

## Claims

1. A method of responding to a winding fault in a wind turbine polyphase generator (2), which method comprises the steps of
- determining a faulty stator winding (Wₓ) in a set (S_{A}, S_{B}, S_{C}) of parallel-connected windings (W) of a phase (A, B, C) ;
- disconnecting the faulty winding (Wₓ); and
- resuming operation of the generator (2), at below-rated power, without the faulty winding (Wₓ).

2. A method according to claim 1, comprising the steps of determining a stator winding (Wₒₚₚ) opposite to the faulty stator winding (Wₓ) and subsequently disconnecting that opposite stator winding (Wₒₚₚ) also.

3. A method according to claim 1 or claim 2, wherein the step of disconnecting the opposite stator winding (Wₒₚₚ) is preceded by a noise monitoring step and/or a vibration monitoring step, and is performed when a noise threshold and/or a vibration threshold is exceeded.

4. A method according to any of the preceding claims, wherein the step of disconnecting a stator winding (Wₓ, Wₒₚₚ) comprises a manual disconnection procedure.

5. A method according to any of the preceding claims, wherein the step of disconnecting a stator winding (Wₓ, Wₒₚₚ) comprises a remote disconnection procedure.

6. A wind turbine generator (2) with a stator (20) wound with a plurality of windings (W), wherein at least one winding (W) is realized to be disconnected, and wherein the generator (2) is realized to operate without a disconnected winding.

7. A wind turbine generator according to claim 6, wherein the stator (20) is wound with a plurality of parallel-connected winding sets (S_{A}, S_{B}, S_{C}), wherein each parallel-connected winding set (S_{A}, S_{B}, S_{C}) is assigned to one of a plurality of phases (A, B, C), and wherein at least one winding (W) of a winding set (S_{A}, S_{B}, S_{C}) is realized to be disconnected from its winding set (S_{A}, S_{B}, S_{C}).

8. A wind turbine generator according to claim 7, wherein each winding (W) is realized to be disconnected from its winding set (S_{A}, S_{B}, S_{C}).

9. A wind turbine generator according to claim 7 or claim 8, wherein a winding (W) comprises a series-connected breaker switch (X).

10. A wind turbine generator according to any of claims 6 to 9, wherein a breaker switch (X) is arranged at a non-drive end of the generator (2).

11. A wind turbine generator according to any of claims 6 to 10, wherein each winding (W) is wound about a single stator tooth of the stator (2).

12. A wind turbine generator according to any of claims 6 to 10, wherein each winding (W) is wound about adjacent stator teeth of the stator (20).

13. A wind turbine (1) comprising
- a generator (2) according to any of claims 6 to 11; and
- a monitoring arrangement (3) realized to detect and report a winding fault.

14. A wind turbine according to claim 13, wherein the monitoring arrangement (3) is realized to monitor an electrical property of a winding (200).
